# EUROPÄISCHE PATENTSCHRIFT

(11) **EP 1 595 086 B1**
(45) Veröffentlichungstag und Bekanntmachung des Hinweises auf die Patenterteilung: **31.10.2007**
(21) Anmeldenummer: 03769023.7
(22) Anmeldetag: 31.10.2003
(51) Int. Cl.: F16D 37/02

(54) **MAGNETORHEOLOGISCHE KUPPLUNG**
MAGNETORHEOLOGIC CLUTCH
EMBRAYAGE MAGNETORHEOLOGIQUE

(30) Priorität: 31.10.2002 AT 7392002 U
(43) Veröffentlichungstag der Anmeldung: 16.11.2005
(73) Patentinhaber: MAGNA Drivetrain AG & Co KG, 8502 Lannach (AT)
(72) Erfinder: STEINWENDER, Herbert, A-8074 Raaba (AT)
(74) Vertreter: Manitz, Finsterwald & Partner GbR
(86) Internationale Anmeldenummer: PCT/AT2003/000328
(87) Internationale Veröffentlichungsnummer: WO 2004/040157

(56) Entgegenhaltungen:
- GB-A- 752 611
- US-A- 2 685 947
- US-A- 5 845 753

## Beschreibung

Die Erfindung betrifft magnetorheologische Kupplungen, die aus einem Stationärteil, einem drehbaren Primärteil mit Primärlamellen und einem um eine gemeinsame Achse drehbaren den Primärteil umgebenden Sekundärteil mit Sekundärlamellen bestehen, wobei zwischen Primärteil und Sekundärteil ein ein magnetorheologisches Fluid enthaltender Raum gebildet ist, in dem sich Primärlamellen und Sekundärlamellen in Achsrichtung abwechseln, und wobei eine Magnet-Magnetspule ein auf das magnetorheologische Fluid wirkendes Magnetfeld regelbarer Feldstärke erzeugt.

Für die Verwendung einer gattungsgemäßen Kupplung im Antriebsstrang eines Kraftfahrzeuges sind aber Stromverbrauch und Baugröße kritisch und daher zu minimieren. Dazu kommen noch weitere Anforderungen: Ein so breiter Regelbereich des übertragenen Momentes, dass einerseits schlupfloses Anfahren aus dem Stand und andererseits (auch) aus Geräuschgründen völliges Trennen, möglich ist; und schließlich schnelles Ansprechen, um mit elektronischen Fahrdynamikregelungen (ESB, ABS, etc.) kompatibel zu sein.

So ist aus der US 5,845,753 eine gattungsgemäße Kupplung bekannt, bei der die Joche von einer Stirnfläche auf einer Seite der Kupplung, diese außen umfangend bis zu einer zweiten Stirnfläche an der anderen Seite der Kupplung reichen. Das erhöht nicht nur Durchmesser und Gewicht, es bedeutet auch eine große zu magnetisierende Masse, was viel Strom verbraucht und dazu führt, dass der Abbau des Magnetfeldes (auskuppeln) für eine brauchbare Steuerung zu lange dauert. Ausserdem sind die magnetischen Kraftlinien, die den mit der magnetorheologischen Flüssigkeit gefüllten Raum durchsetzen, von geringer Dichte und sehr ungleichmäßig verteilt

Es ist daher Aufgabe der Erfindung, eine magnetorheologische Kupplung zu schaffen, die die Nachteile des Standes der Technik vermeidet und den oben angegebenen Anforderungen des modernen Kraftfahrzeuges genügt. Sie soll, vor allem im Durchmesser, möglichst klein bauen, bei einem Minimum an Stromverbrauch ein Maximum an Drehmoment übertragen können und gut steuerbar sein.

Erfindungsgemäß ist zumindest eine Magnetspule in achsialer Richtung vor oder hinter den Lamellen also ungefähr auf gleichem Radius wie diese angeordnet, sie umschlingt ein erstes U-förmiges Joch, dessen beide Stirnflächen an derselben Seite der Lamellen und parallel zu diesen sind und an die Lamellen weitgehend anschließen, ist an der dem ersten Joch abgewandten Seite der Lamellen mindestens ein zweites Joch vorgesehen, und bestehen die in radialer Richtung innerhalb und außerhalb der Lamellen liegenden Regionen des Sekundärteiles aus einem Material geringer magnetischer Permeabilität.

Die U-förmigen Joche (es werden praktisch immer mehrere sein) bewirken eine Umlenkung des Magnetfeldes auf kürzestem Weg und bei einer Minimalen zu magnetisierenden Eisenvolumen. Dadurch minimales Totgewicht und geringe magnetische Widerstände. Ausserdem können die Magnetspulen, die nur die U-förmigen Joche umschlingen sehr klein ausgeführt werden, weil für eine bestimmte magnetische Feldstärke eine bestimmte Anzahl von Windungen erforderlich ist, was bei dem kleinen Durchmesser der Magnetspulen kurze Spulendrahtlängen und kleineren Ohm'schen Widerstand bedeutet. Dadurch, dass die Magnetspulen außerhalb der Kupplung liegen, bessere Wärmeabfuhr.

Die Magnetspulen liegen vor und hinter den Lamellen, weshalb der Außendurchmesser der Kupplung durch den Durchmesser der Lamellen bestimmt ist. Die auf der anderen Seite des Lamellenpaketes angeordneten zweiten Joche schließen die magnetischen Feldlinien, sodaß die an sich schon kurzen magnetischen Feldlinien das Lamellenpaket zweimal durchsetzen, also "doppeltwirkend" sind. Bei entsprechender Anordnung der Magnetspulen ist das Feld über die ganze Fläche des Lamellenpaketes sehr dicht und gleichmäßig. Die aus einem Material geringer magnetischer Permeabilität bestehenden Teile des Sekundärteiles verhindern eine Streuung des Magnetfeldes.

Insgesamt wird so höchste wirksame magnetische Feldstärke bei geringstem, auch für das niedervoltige Bordnetz eines Kraftfahrzeuges leistbarem Stromverbrauch bei minimaler Baugröße. Eine magnetische Flussdichte von über 0,7 [T] (=Tesla) ist erreichbar. Zudem kann das übertragbare Moment durch Erhöhung der Lamellenzahl ohne nennenswerte VergröBerung der Kupplung gesteigert werden. Rein mechanisch ist aber allein schon wegen des großen Durchmessers der außerhalb der Magnetspule liegenden Lamellen groß.

Zur weiteren Verbesserung des Verlaufes der Feldlinien und je nach praktischen Erfordernissen (Einbaumaße, Momentenanforderung) kann der Querschnitt der ersten U-förmigen Joche gegen die Stirnfläche hin vergrößert sein (Anspruch 2), kann das zweite Joch ein in Umfangsrichtung verlaufender flacher Körper und von keiner Magnetspule umgeben sein (Anspruch 3). Wenn auch das zweite Joch U-förmig ausgebildet und von einer Magnetspule umgeben ist (Anspruch 4), erhält man ein symmetrisches Feld besonders hoher Feldliniendichte.

In einer vorteilhaften Ausgestaltung der Erfindung ist das mindestens eine erste U-förmige Joch mit dem Sekundärteil verbunden und die Stirnfläche des ersten Joches bildet die Begrenzungswand des das magnetorheologische Fluid enthaltenden Raumes (Anspruch 5). Die Magnetspulen laufen also mit dem-Sekundärteil um. Dadurch entfällt jeglicher Luftspalt, was eine Minimierung der magnetischen Verluste bedeutet. Das zweite Joch rotiert dann ebenfalls mit dem Sekundärteil, egal ob es U-förmig mit Magnetspule oder flach und ohne ausgebildet ist. In diesem Fall ist für die Zufuhr des elektrischen Stromes zu den Magnetspulen eine elektrische Schleifverbindung nötig.

In einer alternativen vorteilhaften Ausgestaltung der Erfindung sind die ersten U-förmigen Joche mit dem Stationärteil verbunden und deren Stirnflächen grenzen an eine kreisringförmige Region des Sekundärteiles an, deren Permeabilität im Gegensatz zu dem Großteil des Selkundärteiles hoch ist (Anspruch 6). So kommt man ohne eine Schleifverbindung aus, um den Preis eines Luftspaltes, der allerdings wegen der erfindungsgemäßen Anordnung sehr klein gehalten werden kann. Ebenso können die zweiten Joche ausgeführt sein (Anspruch 7).

In einer Variante der Ausgestaltung mit erstem Joch im Stationärteil können die zweiten Joche aber auch ohne eigene Magnetspule im ansonsten aus einem Material geringer Permeabilität bestehenden Sekundärteil ausgebildet sein (Anspruch 8). Denn dann brauchen sie keine Stromzufuhr und können mit dem Sekundärteil rotieren. Dann sind sie entweder als in Umfangsrichtung verlaufende flache Körper ausgebildet oder gleich in den Sekundärteil integriert.

Die Anzahl der ersten und zweiten Joche ist je nach Erfordernissen wählbar. Praktisch werden es aus Symmetriegründen zumindest zwei sein; wenn mehr, dann aus Polaritätsgründen geradzahlige Vielfache von zwei. In einer vorteilhaften Anordnung liegen deren Achsen tangential in einer achsnormalen Ebene (Anspruch 9). Dann liegen die Schenkel der Joche auf gleichem Radius, was die Verteilung der Stirnflächen über die Kreisringfläche der Lamellen erleichtert. Die Schenkel der Joche könnten auch abwechselnd auf verschiedenen Radien sein, wenn ohne Verbreiterung der Füße eine dichteste Packung auf dem Kreisring der Lamellen erzielt werden soll.

In Weiterbildung der vergrößerten Stirnfläche der Joche gemäß Anspruch 2 sind die Stirnflächen der Joche zu aneinander fast anschließenden Kontaktflächen erweitert, deren innerer und äußerer Radius im Wesentlichen dem der Lamellen entspricht (Anspruch 10). Dann ist deren gesamte Kreisringfläche ausgenützt. Dass die Kreisringsektoren nur fast aneinander anschließen, einander also nicht berühren, hat Polaritätsgründe. Besonders günstig ist es, wenn eine gerade Anzahl von Magnetspulen in derartiger Polung aufeinanderfolgen, dass benachbarte Beine ihrer U-förmigen Joche eine gemeinsame Stirnfläche bilden (Anspruch 11). Das kann sowohl auf einer als auch auf beiden Seiten des Lamellenpaketes so sein. Sie sind dann so gepolt, dass die beiden gegenüberliegenden Joche durchlaufenden Feldlinien eine geschlossene Kurve bilden.

Im Folgenden wird die Erfindung anhand von Abbildungen beschrieben und erläutert. Es stellen dar:
- Fig. 1:: Einen Längschnitt durch eine erste bevorzugte Ausführungsform des Erfindungsgegenstandes,
- Fig. 2:: einen Schnitt nach II-II, abgewickelt zur Darstellung der magnetischen Feldlinien,
- Fig. 3:: eine Variante zu Fig. 1.
- Fig. 4:: einen Längschnitt durch eine zweite Ausführungsform des Erfindungsgegenstandes,
- Fig.5:: eine Ansicht gemäß V in Fig. in einer ersten Variante, verkleinert,
- Fig.6:: einen Schnitt nach AA dazu,
- Fig.7:: eine Ansicht gemäß V in Fig. in einer zweiten Variante, verkleinert,
- Fig.8:: eine Ansicht gemäß V in Fig. in einer dritten Variante, verkleinert,
- Fig.9:: eine Ansicht gemäß V in Fig. in einer vierten Variante, verkleinert.

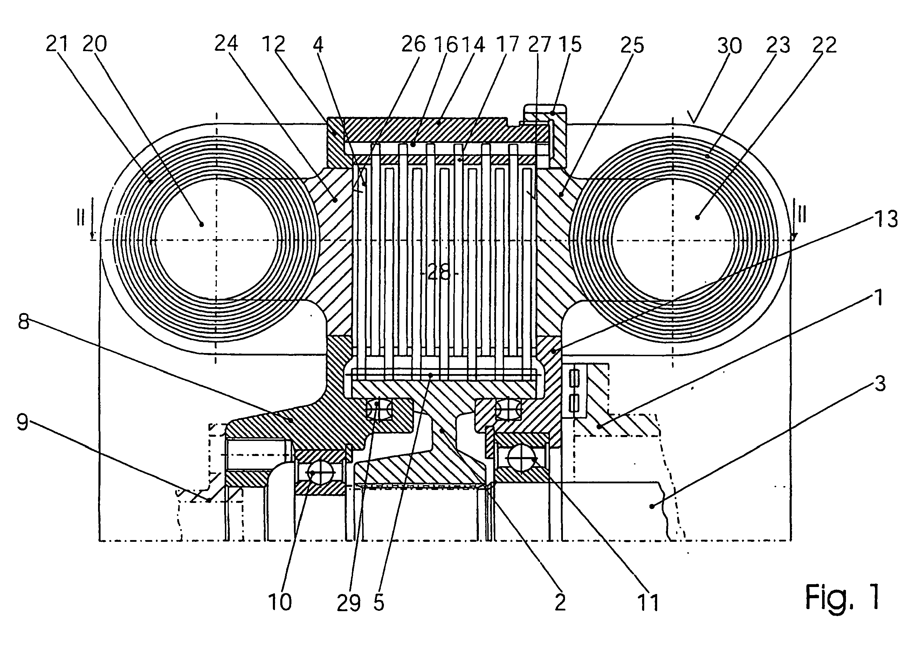

In **Fig. 1** ist vom Stationärteil 1 nur der Kragen abgebildet, der den Schleifkontakt für die Zufuhr des elektrischen Stromes zu den Magnetspulen herstellt. Die Drehmomentübertragung in der Kupplung erfolgt zwischen einem Primärteil 2 und einem Sekundärteil 8. Der Primärteil 2 sitzt drehfest auf einer Primärvvelle 3 und bildet eine Trommel 5 mit Kuppelzähnen für die drehfeste, aber verschiebbare Aufnahme der Primärlamellen 4. Der Primärteil 2 selbst besteht aus einem Werkstoff sehr kleiner magnetischer Permeabilität, die Primärlamellen 4 aus einem Werkstoff hoher magnetischer Permeabilität.

Der Sekundärteil 8 ist mit dem Anschlussflansch 9 einer Sekundärwelle verschraubt und nimmt in Lagern 10,11 die Primärwelle 3 auf. Sekundärteil 8 und Primärteil 2 sind koachsial. Der Sekundärteil 8 besteht aus einem vorderen Deckel 12, einem hinteren Deckel 13 und einer Umfangswand 14, die auf der einen Seite mit dem vorderen Deckel 12 verschweißt und auf der anderen Seite mittels einer Ringmutter 15 mit dem hinteren Deckel 13 verbunden ist. Die Umfangswand 14 hat innen eine Kuppelverzahnung 16, in der die Sekundärlamellen 17 drehfest, aber verschiebbar, angeordnet sind.

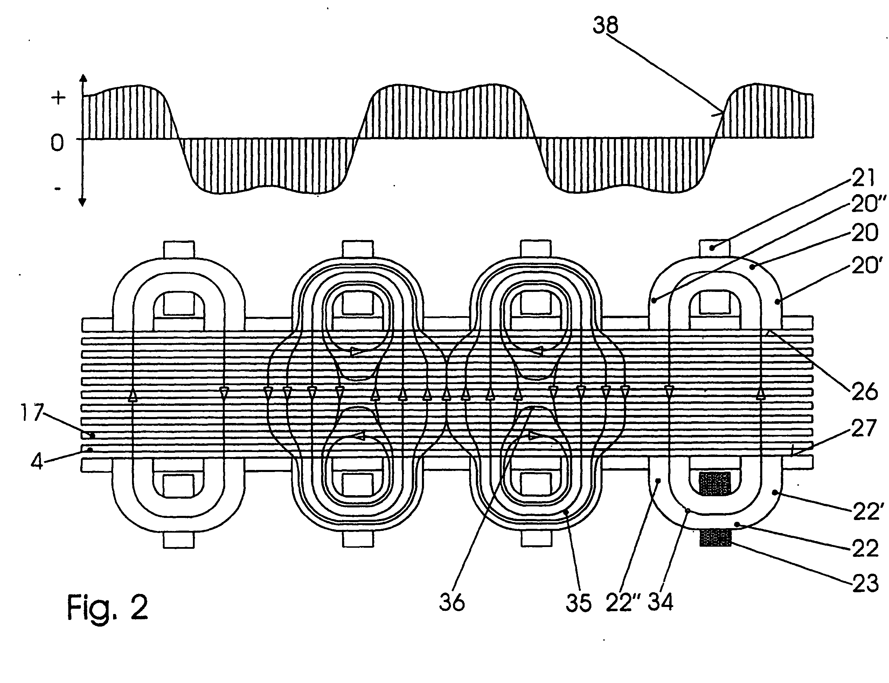

Mit dem Sekundärteil 8 verbunden ist ein erstes Joch 20 mit einer ersten Spule 21 auf der Seite des vorderen Deckels 12 und ein zweites Joch 22 mit einer zweiten Spule 23 auf der Seite des hinteren Deckels 13. Die Joche 20,22 (siehe Fig. 2) sind U-förmig, ihr Mittelteil ist von der Spule 21,23 umschlungen, deren Beine 20',20" sich parallel zur Drehachse in den vorderen bzw. hinteren Deckel 12,13 erstrecken. Die beiden Joche bilden dort Füße 24,25 die einen größeren Querschnitt als die Schenkel der Joche haben und in Stirnflächen 26,27 enden. Die Füße 24,25 sind mit dem vorderen bzw. hinteren Deckel 12,13 fest verbunden und bestehen naturgemäß aus einem Werkstoff hoher magnetischer Permeabilität, wogegen der gesamte Sekundärteil 8 mit Ausnahme der Sekundärlamellen 17 aus einem Werkstoff sehr kleiner magnetischer Permeabilität besteht.

So wird ein Raum 28 gebildet, der abwechselnd eine Anzahl von Primärlamellen 4 und Sekundärlamellen 17, sowie eine magnetorheologische Flüssigkeit enthält. Dieser Raum wird innen von der Trommel 5 dieses Primärteiles, außen von der Umfangswand 14 des Sekundärteiles und vorne und hinten durch die Innenwände des vorderen (12) und hinteren Deckels 13, sowie die Stirnflächen 26,27 der Joche 20,22 begrenzt. Der von Lamellen freie Teil ist mit einer magnetorheologischen Flüssigkeit befüllt. Zwischen der Trommel 5 des Primärteiles 2 und Sekundärteil 8 sind Dichtungen 29 vorgesehen, die den Raum 28 hermetisch abschließen. Zum Schutz der Magnetspulen 21,23 kann schließlich noch ein mitrotierendes Verkleidungsblech 30 vorgesehen sein.

In **Fig. 2** ist ein zylindrischer Schnitt durch die Joche 20,22 gemäß II-II abgewickelt dargestellt (Fig. 2a), darüber die magnetischen Feldstärken (Fig. 2b). In diesem Schnitt sind nur mehr die Teile dargestellt, in denen die magnetischen Feldlinien verlaufen, somit jene, die aus einem Werkstoff hoher magnetischer Permeabilität bestehen. Das sind die Joche 20,22 und die abwechselnden Lamellen 4,17. Man erkennt die U-Form des Joches 20 mit seinen Beinen 20',20" und eine dicke geschlossene Kurve 34, die die Richtung und Polarität des Magnetfeldes anzeigt (gegen den Urzeigersinn). In der im Bild links benachbarten Region ist die Feldrichtung 35 im Uhrzeigersinn, also der an den Jochen 20,22 entgegengesetzt. Hier sind auch mehrere Feldlinien angedeutet, sodass eine Zone 36 erkennbar ist, in der die Feldstärke einen Nulldurchgang hat.

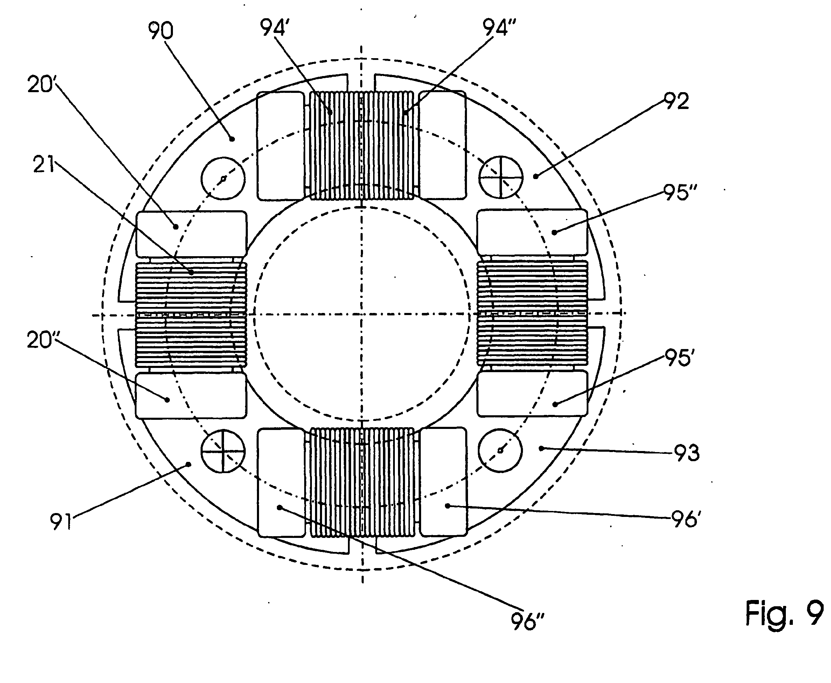

Das ist in der darüber liegenden Kurve 38 der Fig. 2b, die den Verlauf der magnetischen Feldstärke entlang des Umfanges darstellt, besser zu erkennen. Die Fig. 2 ist insoferne allgemein, als vier über den Umfang verteilte Joche (wie in Fig. 9) vorgesehen sind. Es könnte auch nur ein einziges Joch oder zwei Joche oder deren Vielfache vorgesehen sein, um im Sinne der Zielsetzung der Erfindung in dem die Lamellen enthaltenden Raum 28 insgesamt eine möglichst hohe und gleichmäßig verteilte magnetische Feldstärke zu erreichen.

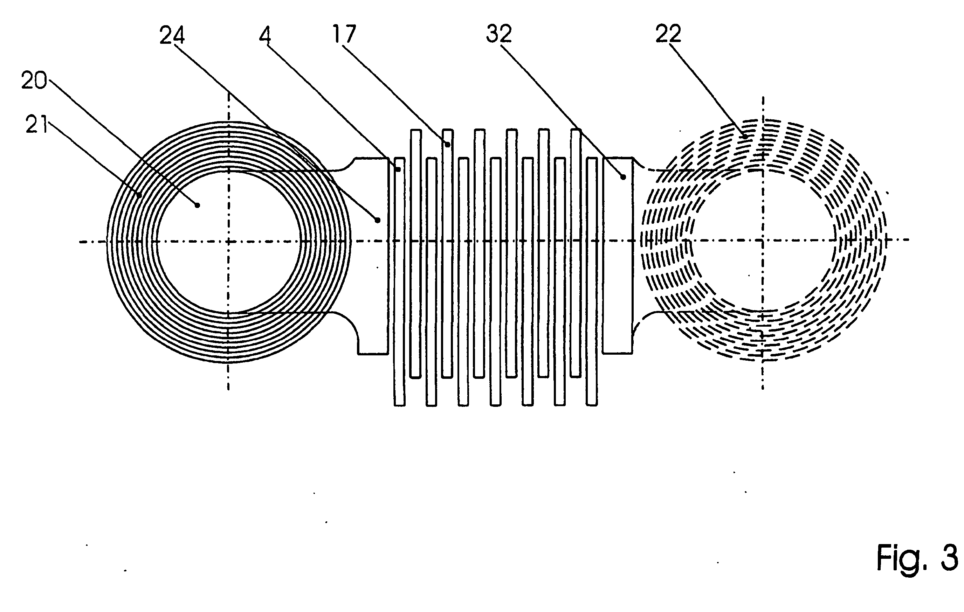

**Fig. 3** zeigt nur die Teile hoher magnetischer Permeabilität, wobei das rechte Joch 22 der Fig. 1 nur strichliert angedeutet ist. Es ist nämlich im Rahmen der Erfindung auch möglich, sich mit einem ersten Joch 20 mit einer Spule 21, oder deren mehreren, zu benügen und das zweite Joch 32 als flachen Körper bzw. als Platte auszubilden, der von keiner Magnetspule umschlungen ist Diese Platte 32 erstreckt sich dann in Umfangsrichtung über die Füße 24 beider Beine 20',20" des Joches 20. Auf diese Weise ist der magnetische Fluss auch wieder eine geschlossene Kurve. Dabei ist auch eine Anordnung denkbar, bei der die Platte 32 einmal als zweites Joch und daran anschließend einmal als erstes Joch fungiert.

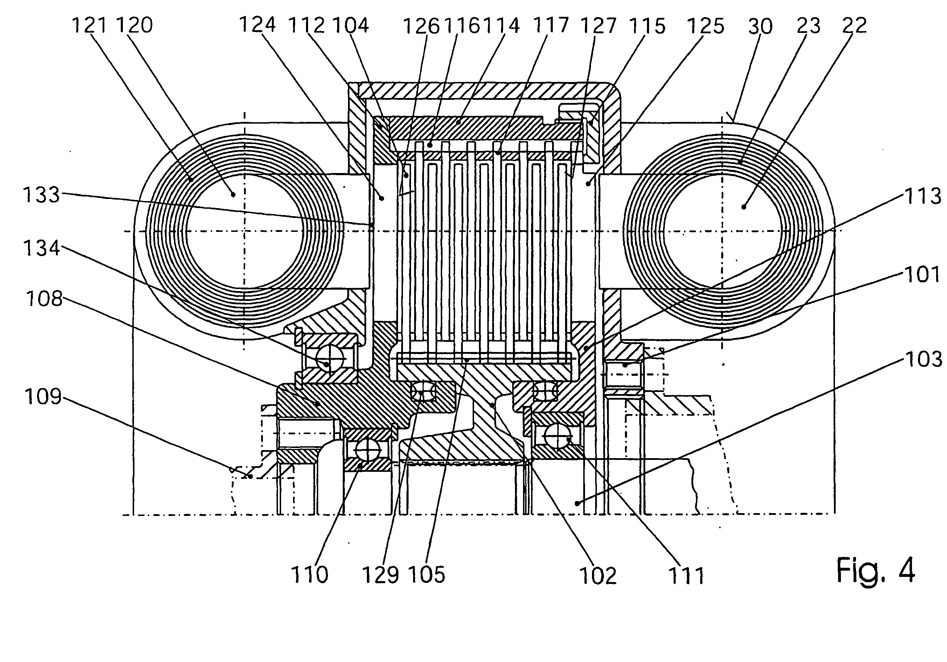

In der Variante der **Fig. 4** sind gleiche bzw. analoge Teile mit den um 100 erhöhten Bezugszeichen der Fig. 1 versehen. Zum Unterschied von der Fig. 1 sind hier die Joche 120,122 im Stationärteil 101, also nicht rotierend, angebracht. Dadurch sind keine Schleifkontakte mehr erforderlich. Die Füße 124,125 der Joche 120,122 sind jedoch von den Jochen selbst durch Luftspalte 133,134 getrennt, die allerdings dank der erfindungsgemäßen Anordnung sehr klein gehalten werden können. Die Füße 124,125 sind in die Seitenwände 112,113 des Sekundärteiles 108 eingelassen, sodass die Verhältnisse im Raum 128 wieder dieselben sind wie in Fig. 1. Zwischen dem Stationärteil 101 und dem Sekundärteil 108 ist eine weitere Lagerung 134 vorgesehen. In Anlehnung an die Variante der Fig. 3 kann der Fuß 125 alleine bereits als Joch dienen, wenn man auf die entsprechende Spule 123 verzichtet.

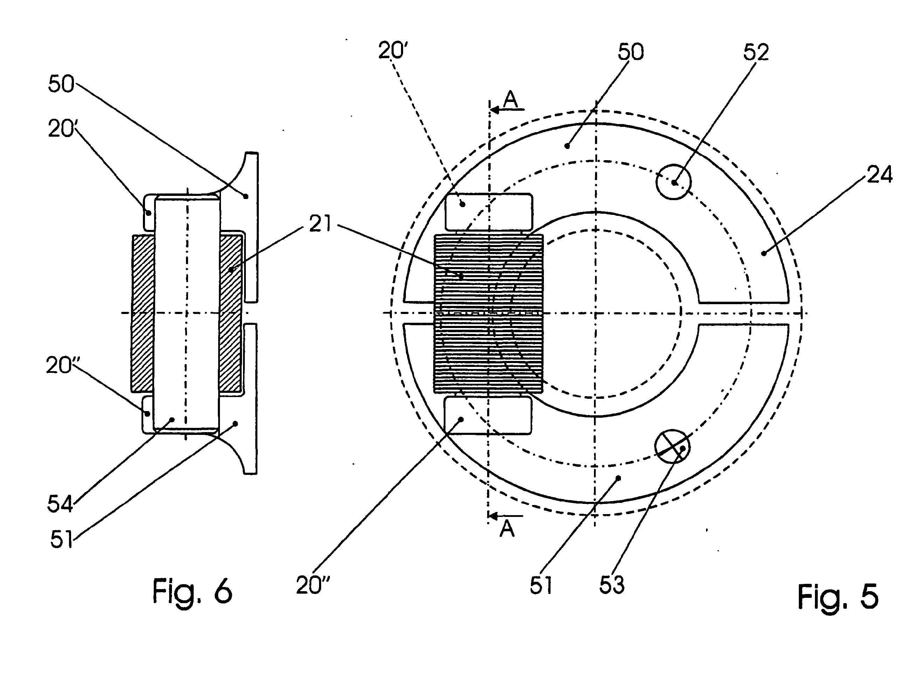

**Fig. 5** und **Fig. 6** zeigen die einfachste Ausführungsvariante der Erfindung mit nur zwei Spulen, wovon die Spule 21 auf der Vorderseite des Sekundärteiles 8 sichtbar und die zweite hinter dem Sekundärteil 8 unsichtbar, aber mit der ersten deckungsgleich, ist. Die Füße 24 des Joches 20 sind hier in Umfangsrichtung so weit verbreitert, dass sie die Hälfte eines Kreisringes 50,51 bilden. Dabei deuten die Symbole 52,53 die Polung des Magnetfeldes an. 52 ist die Flussrichtung auf den Betrachter zu, 53 vom Betrachter weg.

In **Fig. 6** ist noch zu sehen, dass das Joch 20 in diesem Fall nicht einteilig ist, sondern aus den beiden häbkreisringförmigen Füßen mit ihrem Bein 20' bzw. 20" besteht, die - als Mittelteil des U - einen geraden Bolzen 54 aufnehmen, der seinerseits von der Spule 21 umschlungen ist Bei aller Einfachheit hat diese Ausfühnmgsform den Nachteil, ein wenig homogenes Feld zu erzeugen, das auf die Lamellen 4,17 ein Kippmoment ausübt. Man betrachte dazu die Richtungspfeile 52,53.

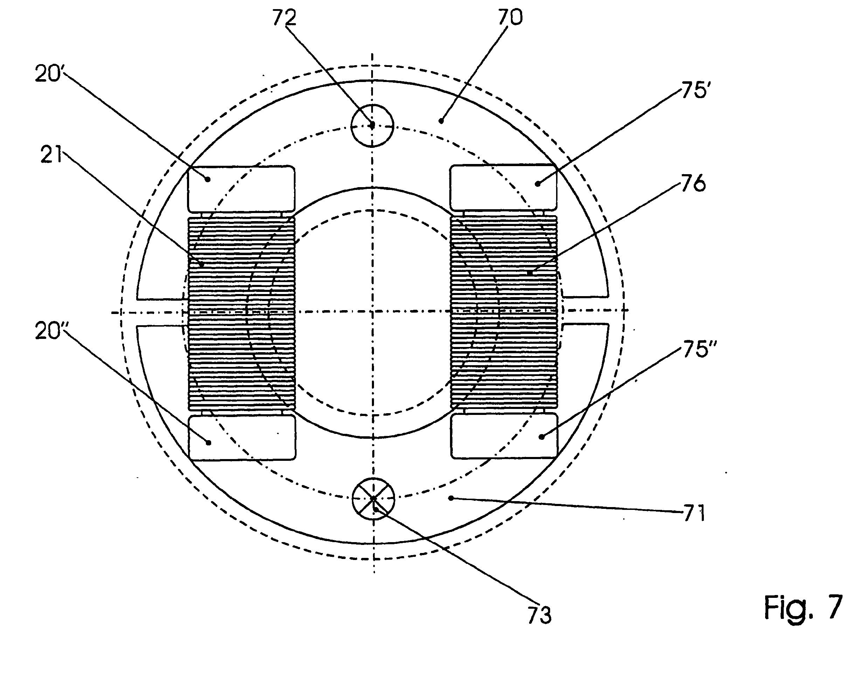

In der Variante der **Fig. 7** sind zwei Magnetspulen 21,76 sichtbar an der Vorderseite des Sekundärteiles. An dessen Hinterseite sind entweder auch zwei deckungsgleiche Spulen vorgesehen, oder keine. Siehe Variante der Fig. 3. Hier sind wieder die Beine 20` der ersten Spule 21 und 75' der zweiten Spule 76 mit einem halbkreisförmigen Fuß 70 verbunden; und die anderen Beine 20",75" der beiden Spulen 21,76 mit einem anderen gemeinsamen kreisringförmigen Fuß 71. Die beiden Kreisringhälften berühren einander mit ihren Stirnseiten jedoch nicht, sie sind ja verschieden gepolt. Auf der Hinterseite des Sekundärteiles 8 sind dieselben Füße, unsichtbar, ebenfalls deckungsgleich mit den sichtbaren ausgeführt. Bei dieser Variante ist die Feldverteilung schon homogener, es wird jedoch immer noch ein Kippmoment auf die Lamellen ausgeübt.

Durch Vergrößerung der Anzahl der Spulen können die einzelnen Spulen kleiner ausgeführt werden, was nebst der Platzersparnis auch eine Ersparnis an Gewicht, insbesondere an Kupfergewicht mit sich bringt. Für die magnetische Feldstärke ist ja nicht die Länge des Drahtes, sondern die Anzahl der Windungen ausschlaggebend. Bei kleinerem Durchmesser der Spule und gleicher Windungszahl wird die Länge des Drahtes naturgemäß kleiner sein.

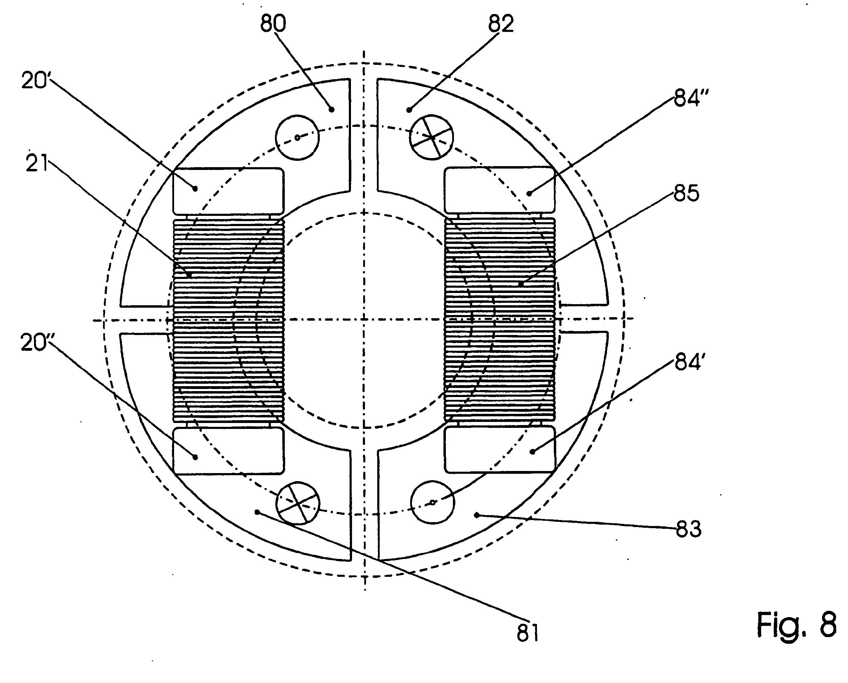

In der Variante der **Fig. 8** sind auf der sichtbaren Seite zwei Spulen 21, 85, deren Joche wieder je zwei Beine haben. Jeder der Beine 20',20", 84',84" ist zu einem eigenen Fuß 80,81,82,83 erweitert, deren jeder ein Viertel eines Kreisringes bildet. Die einzelnen Füße dürfen einander wieder nicht berühren. Die Pfeile wieder die Polung des Magnetfeldes. Es ist zu erkennen, dass bei dieser Anordnung auf die Lamellen kein Kippmoment mehr ausgeübt wird.

Die Variante der **Fig. 9** hat vier kleine Spulen mit ihren Jochen 20,94, 95, 96, wovon jeweils ein Bein mit derselben Polung (z. B. 20',94') einen gemeinsamen viertelkreisringförmigen Fuß 90 hat. Auch hier sind die Kreisringsektoren auf der Hinterseite des Sekundärteiles 8 deckungsgleich und mit oder ohne Magnetspule. Bei den gezeigten vier Magnetspulen (es könnten aber auch höhere Vielfache von zwei sein) sind die Magnetspulen sehr klein, sodass der Innendurchmesser der Füße 90,92, 93,91 kaum überschritten wird, sodass für den Anschluss der Sekundärwelle 9 (Fig. 1) bzw. anderer Triebstrangteile mehr Bauraum zur Verfügung steht.

Insgesamt ist bei allen beschriebenen Varianten bei gegebener Stromstärke ein Maximum an magnetischer Feldstärke über den gesamten Kupplungsraum gegeben, wobei die Anpassung an praktische Erfordernisse durch Auswahl einer der vielen beschriebenen Varianten oder deren Kombinationen möglich ist. In allen Fällen ist wegen der Anordnung der Magnetspulen vor und hinter den Lamellen der Kupplung (und nicht innerhalb oder ausserhalb dieser) auch der Bauraum in radialer Richtung relativ klein. Das ist für die Verwendung im Antriebsstrang eines Kraftfahrzeuges von besonderem Vorteil.

## Patentansprüche

1. Magnetorheologische Kupplung bestehend aus einem Stationärteil (1; 101), einem drehbaren Primärteil (2; 102) mit Primärlamellen (4; 104) und einem um eine gemeinsame Achse drehbaren den Primärteil (2; 102) umgebenden Sekundärteil (8; 108) mit Sekundärlamellen (17; 117), wobei zwischen Primärteil (2; 102) und Sekundärteil (8; 108) ein ein magnetorheologisches Fluid enthaltender Raum (28; 128) gebildet ist, in dem sich Primärlamellen (4; 104) und Sekundärlamellen (17; 117) in Achsrichtung abwechseln, und wobei auf das magnetorheologische Fluid ein regelbares Magnetfeld wirkt, **dadurch gekennzeichnet, dass**
a) zumindest eine Magnetspule (21) in achsialer Richtung vor oder hinter den Lamellen (4,17; 104,117) angeordnet ist und ein erstes U-förmiges Joch (20; 120) umschlingt, dessen beide Stirnflächen (26; 126) an derselben Seite der Lamellen und parallel zu diesen sind,
b) an der dem ersten Joch (20; 120) abgewandten Seite der Lamellen mindestens ein zweites Joch (22; 32; 122) vorgesehen ist, und
c) dass die in radialer Richtung innerhalb und ausserhalb der Lamellen (4, 17; 104,117) liegenden Regionen des Sekundärteiles (8; 108) aus einem Material geringer magnetischer Permeabilität bestehen.

2. Magnetorheologische Kupplung nach Anspruch 1, **dadurch gekennzeichnet, dass** sich der Querschnitt des ersten U-förmigen Joches (20; 120) gegen die Stirnfläche (26; 126) hin vergrößert.

3. Magnetorheologische Kupplung nach Anspruch 1, **dadurch gekennzeichnet, dass** das zweite Joch ein in Umfangsrichtung verlaufender flacher Körper (32) und von keiner Magnetspule umgeben ist (Fig.3).

4. Magnetorheologische Kupplung nach Anspruch 1, **dadurch gekennzeichnet, dass** auch das zweite Joch (22; 122) U-förmig ausgebildet und von einer Magnetspule (23; 123) umgeben ist.

5. Magnetorheologische Kupplung nach Anspruch 1, **dadurch gekennzeichnet, dass** das mindestens eine erste U-förmige Joch (20) mit dem Sekundärteil (8) verbunden ist und die Stirnfläche (26) des ersten Joches (20) die Begrenzungswand des das magnetorheologische Fluid enthaltenden Raumes (28) bildet.

6. Magnetorheologische Kupplung nach Anspruch 1, **dadurch gekennzeichnet, dass** das mindestens eine erste U-förmige Joch (120) mit dem Stationärteil (101) verbunden ist und an eine kreisringförmige Region (124) hoher Permeabilität des Sekundärteiles (108) angrenzt (Fig. 4).

7. Magnetorheologische Kupplung nach Anspruch 6, **dadurch gekennzeichnet, dass** auch das mindestens eine zweite Joch (122) mit dem Stationärteil (101) verbunden ist und an eine kreisringförmige Region (125) hoher Permeabilität des Sekundärteiles (108) angrenzt.

8. Magnetorheologische Kupplung nach Anspruch 6, **dadurch gekennzeichnet, dass** das zweite Joch (32) ohne eigene Magnetspule im ansonsten aus einem Material geringer Permeabilität bestehenden Sekundärteil (108) ausgebildet ist.

9. Magnetorheologische Kupplung nach Anspruch 1, **dadurch gekennzeichnet, dass** eine Anzahl von Jochen (20; 20,22; 20,75; 20,84; 20,94,95, 96) und Magnetspulen (21; 21,23; 21,76; 21,85) vorgesehen ist, wobei deren Achsen tangential in einer achsnormalen Ebene liegen.

10. Magnetorheologische Kupplung nach Anspruch 9, **dadurch gekennzeichnet, dass** die Stirnflächen der Joche (20; 20,22; 20,75; 20,84; 20,94,95, 96) zu aneinander fast anschließenden Kreisringsektoren (50,51; 70,71; 80, 81,82,83; 90,91,92,93) erweitert sind, deren innerer und äußerer Radius im Wesentlichen dem der Lamellen (4,17; 104,117) entspricht.

11. Magnetorheologische Kupplung nach Anspruch 10, **dadurch gekennzeichnet, dass** eine gerade Anzahl von Magnetspulen in derartiger Polung aufeinanderfolgen, dass benachbarte Beine (94",95",95',96',96", 20",20', 94') ihrer U-förmigen Joche (20,94,95,96) einen gemeinsamen Kreisringsektor als Stirnfläche bilden.

## Claims

1. A magnetorheological clutch comprising a stationary part (1; 101), a rotatable primary part (2; 102) with primary lamellae (4; 104) and a secondary part (8; 108) with secondary lamellae (17; 117) which is rotatable about a common axis and surrounds the primary part (2; 102), wherein a space (28; 128) which contains a magnetorheological fluid and in which the primary lamellae (4; 104) and secondary lamellae (17; 117) alternate in the axial direction is formed between the primary part (2; 102) and the secondary part (8; 108), and wherein a regulable magnetic field acts on the magnetorheological fluid, **characterised in that**
a) at least one magnet coil (21) is arranged in front of or behind the lamellae (4, 17; 104, 117) in the axial direction and is coiled around a first U-shaped yoke (20; 120), the two end faces (26; 126) of which are on the same side of the lamellae and parallel to them,
b) at least one second yoke (22; 32; 122) is provided on the side of the lamellae which faces away from the first yoke (20; 120), and
c) the regions of the secondary part (8; 108) which lie inside and outside the lamellae (4, 17; 104, 117) in the radial direction consist of a material of low magnetic permeability.

2. A magnetorheological clutch in accordance with claim 1, **characterised in that** the cross-section of the first U-shaped yoke (20; 120) is increased toward the end face (26; 126).

3. A magnetorheological clutch in accordance with claim 1, **characterised in that** the second yoke is a flat body (32) extending in the circumferential direction and is not surrounded by a magnet coil (Fig. 3).

4. A magnetorheological clutch in accordance with claim 1, **characterised in that** the second yoke (22; 122) is also of U-shaped design and is surrounded by a magnet coil (23; 123).

5. A magnetorheological clutch in accordance with claim 1, **characterised in that** the at least one first U-shaped yoke (20) is connected to the secondary part (8) and the end face (26) of the first yoke (20) forms the boundary wall of the space (28) containing the magnetorheological fluid.

6. A magnetorheological clutch in accordance with claim 1, **characterised in that** the at least one first U-shaped yoke (120) is connected to the stationary part (101) and is adjacent to an annular region (124) of high permeability of the secondary part (108).

7. A magnetorheological clutch in accordance with claim 6, **characterised in that** the at least one second yoke (122) is also connected to the stationary part (101) and is adjacent to an annular region (125) of high permeability of the secondary part (108).

8. A magnetorheological clutch in accordance with claim 6, **characterised in that** the second yoke (32) is designed without its own magnet coil in the secondary part (108) otherwise consisting of a material of low permeability.

9. A magnetorheological clutch in accordance with claim 1, **characterised in that** a number of yokes (20; 20, 22; 20, 75; 20, 84; 20, 94, 95, 96) and magnet coils (21; 21, 23; 21, 76; 21, 85) are provided, their axes lying tangentially in an axially normal plane.

10. A magnetorheological clutch in accordance with claim 9, **characterised in that** the end faces of the yokes (20; 20, 22; 20, 75; 20, 84; 20, 94, 95, 96) are widened to form annular sectors (50, 51; 70, 71; 80, 81, 82, 83; 90, 91, 92, 93) which almost adjoin one another and the inner and outer radius of which corresponds essentially to that of the lamellae (4, 17; 104, 117).

11. A magnetorheological clutch in accordance with claim 10, **characterised in that** an even number of magnet coils succeed one another in a polarity such that adjacent legs (94", 95", 95', 96', 96", 20", 20', 94') of their U-shaped yokes (20, 94, 95, 96) form a common annular sector as an end face.

## Revendications

1. Embrayage magnétorhéologique, comprenant une partie stationnaire (1 ; 101), une partie primaire rotative (2 ; 102) avec des lamelles primaires (4 ; 104) et une partie secondaire (8 ; 108) en rotation autour d'un axe commun et entourant la partie primaire (2 ; 102) avec des lamelles secondaires (17 ; 117), dans lequel entre la partie primaire (2 ; 102) et la partie secondaire (8 ; 108) est définie une chambre (28 ; 128) qui contient un fluide magnétorhéologique et dans laquelle les lamelles primaires (4 ; 104) et les lamelles secondaires (17 ; 117) alternent en direction axiale, et un champ magnétique réglable agit sur le fluide magnétorhéologique, **caractérisé en ce que**
a) au moins une bobine magnétique (21) est agencée devant ou derrière les lamelles (4, 17 ; 104, 117) en direction axiale et entoure un premier étrier (20 ; 120) en forme de U, dont les deux surfaces frontales (26, 126) se trouvent sur le même côté des lamelles et parallèlement à celles-ci,
b) sur le côté des lamelles détourné du premier étrier (20 ; 120) est prévu au moins un second étrier (22 ; 32 ; 122), et
c) les régions de la partie secondaire (8 ; 108) situées en direction radiale à l'intérieur et à l'extérieur des lamelles (4, 17 ; 104, 117) sont en un matériau présentant une plus faible perméabilité magnétique.

2. Embrayage magnétorhéologique selon la revendication 1, **caractérisé en ce que** la section du premier étrier (20 ; 120) en forme de U s'agrandit en direction de la surface frontale (26 ; 126).

3. Embrayage magnétorhéologique selon la revendication 1, **caractérisé en ce que** le second étrier est un corps plat (32) qui s'étend en direction périphérique et qui n'est entouré par aucune bobine magnétique (figure 3).

4. Embrayage magnétorhéologique selon la revendication 1, **caractérisé en ce que** le second étrier (22 ; 122) est également réalisé en forme de U et est entouré par une bobine magnétique (23 ; 123).

5. Embrayage magnétorhéologique selon la revendication 1, **caractérisé en ce que** ledit au moins un premier étrier en forme de U (20) est relié à la partie secondaire (8), et la surface frontale (26) du premier étrier (20) forme la paroi de délimitation de la chambre (28) qui contient le fluide magnétorhéologique.

6. Embrayage magnétorhéologique selon la revendication 1, **caractérisé en ce que** ledit au moins un premier étrier en forme de U (120) est relié à la partie stationnaire (101) et est adjacent à une région de forme circulaire (124) de plus forte perméabilité de la partie secondaire (108) (figure 4).

7. Embrayage magnétorhéologique selon la revendication 6, **caractérisé en ce que** ledit au moins un second étrier (122) est également relié à la partie stationnaire (101) et est adjacent à une région de forme circulaire (125) de plus forte perméabilité de la partie secondaire (108).

8. Embrayage magnétorhéologique selon la revendication 6, **caractérisé en ce que** le second étrier (32) est réalisé sans bobine magnétique propre dans une partie secondaire (108) réalisée par ailleurs en un matériau de plus faible perméabilité.

9. Embrayage magnétorhéologique selon la revendication 1, **caractérisé en ce qu'**il est prévu un certain nombre d'étriers (20 ; 20, 22 ; 20, 75 ; 20, 84 ; 20, 94, 95, 96) et de bobines magnétiques (21 ; 21, 23 ; 21, 76 ; 21, 85), leurs axes étant situés tangentiellement dans un plan perpendiculaire à l'axe.

10. Embrayage magnétorhéologique selon la revendication 9, **caractérisé en ce que** les surfaces frontales des étriers (20 ; 20, 22 ; 20, 75 ; 20, 84 ; 20, 94, 95, 96) sont élargies pour former des secteurs circulaires (50, 51 ; 70, 71 ; 80, 81, 82, 83 ; 90, 91, 93) qui se raccordent presque les uns aux autres, dont le rayon intérieur et dont le rayon extérieur correspondent essentiellement à ceux des lamelles (4, 17 ; 104, 117).

11. Embrayage magnétorhéologique selon la revendication 10, **caractérisé en ce qu'**il est prévu un nombre pair de bobines magnétiques qui se suivent avec des polarités telles que des pieds voisins (94", 95", 95', 96', 96", 20", 20', 94') de leurs étriers en forme de U (20, 94, 95, 96) forment un secteur circulaire commun à titre de surface frontale.
